# EUROPÄISCHE PATENTANMELDUNG

(11) **EP 2 469 183 A2**
(43) Veröffentlichungstag der Anmeldung: **27.06.2012**
(21) Anmeldenummer: 11194845.1
(22) Anmeldetag: 21.12.2011
(51) Int. Cl.: F24C 15/16

(54) **Gargutträger**

(30) Priorität: 22.12.2010 ES 201031910
(71) Anmelder: BSH Bosch und Siemens Hausgeräte GmbH, 81739 München (DE)
(72) Erfinder: Del Mazo Muriedas, Jerónimo, 50014 Zaragoza (ES); Galindo Perez, Juan Jose, 50007 Zaragoza (ES)

(57) **Zusammenfassung**

Die Erfindung geht aus von einem Gargutträger mit einem Aluminiumgrundkörper (10) und einer Aluminiumoxid umfassenden Schutzschicht (12), die auf dem Aluminiumgrundkörper (10) angeordnet ist.

Um einen gattungsgemäßen Gargutträger mit einer vorteilhaft höheren mechanischen Beständigkeit bereitzustellen, wird vorgeschlagen, dass die Schutzschicht (12) hartanodisiert ist.

## Beschreibung

Die Erfindung geht aus von einem Gargutträger nach dem Oberbegriff des Anspruchs 1.

Aus der GB 648 435 A ist ein als Backblech ausgeführter Gargutträger aus Aluminium oder einer Aluminiumlegierung bekannt, der von einer Aluminiumoxidschicht vollständig bedeckt ist.

Die Aufgabe der Erfindung besteht insbesondere darin, einen gattungsgemäßen Gargutträger mit einer vorteilhaft höheren mechanischen Beständigkeit bereitzustellen. Die Aufgabe wird erfindungsgemäß durch die Merkmale des Patentanspruchs 1 und des Verfahrensanspruchs 9 gelöst, während vorteilhafte Ausgestaltungen und Weiterbildungen der Erfindung den Unteransprüchen entnommen werden können.

Die Erfindung geht aus von einem Gargutträger mit einem Aluminiumgrundkörper und einer Aluminiumoxid umfassenden Schutzschicht, die auf dem Aluminiumgrundkörper angeordnet ist.

Es wird vorgeschlagen, dass die Schutzschicht hartanodisiert ist. Unter einem "Gargutträger" soll insbesondere eine Einschubeinheit verstanden werden, welche dazu vorgesehen ist, in eine Muffel eines Gargeräts eingeschoben zu werden und Gargut aufzunehmen und/oder zu tragen. Unter "vorgesehen" soll insbesondere speziell ausgelegt und/oder ausgestattet und/oder programmiert verstanden werden. Vorzugsweise umfasst der Gargutträger einen Garrost und/oder ein Garblech und/oder eine Fettfangwanne. Unter einem "Aluminiumgrundkörper" soll insbesondere ein Bauteil verstanden werden, welches zumindest 60%, vorzugsweise wenigstens 70% und besonders vorteilhaft mindestens 80% einer Gesamtmasse des Gargutträgers umfasst und welches als Hauptbestandteil Aluminium aufweist. Unter einem "Hauptbestandteil" eines Bauteils soll insbesondere ein Bestandteil des Bauteils verstanden werden, dessen Massenanteil zumindest 60%, vorzugsweise wenigstens 70% und besonders vorteilhaft mindestens 80% beträgt. Besonders vorteilhaft besteht der Aluminiumgrundkörper aus einer Aluminiumlegierung oder im Wesentlichen aus reinem Aluminium. Unter "im Wesentlichen reinem Aluminium" soll insbesondere Aluminium mit einem Reinheitsgrad von zumindest 97%, vorzugsweise von wenigstens 98% und besonders vorteilhaft von mindestens 99% verstanden werden. Unter "Aluminiumoxid" soll insbesondere eine chemische Verbindung aus zwei Aluminiumatomen und drei Sauerstoffatomen verstanden werden. Vorzugsweise liegt das Aluminiumoxid in Form von weitgehend amorphem _{Y}-Aluminiumoxid vor. Unter "weitgehend amorph" soll insbesondere verstanden werden, dass ein Massenanteil von mehr als 60%, vorzugsweise von mehr als 70% und besonders vorteilhaft von mehr als 80% in einer amorphen Phase vorliegt. Unter einer "Schutzschicht" soll insbesondere eine Schicht auf dem Aluminiumgrundkörper verstanden werden, die dazu vorgesehen ist, einen Schutz des Aluminiumgrundkörpers vor mechanischer Belastung, insbesondere einem Abrieb, und/oder chemischer Belastung, insbesondere einer Korrosion und/oder einer Einwirkung von Lösungs- und/oder Reinigungsmitteln, bereitzustellen. Insbesondere verfügt die Schutzschicht über eine starke Adhäsion zum Aluminiumgrundkörper und über eine größere Härte und/oder über eine größere Korrosionsbeständigkeit als der Aluminiumgrundkörper. Darunter, dass die Schutzschicht "auf dem Aluminiumgrundkörper angeordnet ist", soll insbesondere verstanden werden, dass ein von zumindest einem Punkt des Aluminiumgrundkörpers ausgehender Strahl zunächst im Aluminiumgrundkörper verläuft, dann eine Grenzfläche zwischen dem Aluminiumgrundkörper und der Schutzschicht durchstößt und schließlich in der Schutzschicht verläuft. Vorzugsweise ist die Schutzschicht auf in einem montierten Zustand sichtbaren Stellen des Aluminiumgrundkörpers und/oder auf Stellen mit erhöhter mechanischer und/oder chemischer Beanspruchung des Aluminiumgrundkörpers angeordnet. Insbesondere kann die Schutzschicht den Aluminiumgrundkörper teilweise bedecken. Vorteilhaft ist der Aluminiumgrundkörper jedoch vollständig von der Schutzschicht bedeckt. Darunter, dass die Schutzschicht "hartanodisiert" ist, soll insbesondere verstanden werden, dass die Schutzschicht durch Hartanodisieren hergestellt ist. Unter "Hartanodisieren" soll insbesondere ein Verfahren zu einer elektrolytischen Oxidation eines Aluminiumwerkstoffs zu einer Erzeugung einer Schutzschicht auf dem Aluminiumwerkstoff verstanden werden, bei dem ein gekühlter, insbesondere saurer Elektrolyt verwendet wird. Vorzugsweise wird als Elektrolyt Schwefelsäure verwendet, insbesondere 10-prozentige bis 15-prozentige Schwefelsäure. Vorzugsweise wird während der elektrolytischen Oxidation eine elektrische Spannung schrittweise erhöht, ausgehend von 10 V bis 100 V. Vorzugsweise wird der Elektrolyt auf eine Temperatur von kleiner als 5°C, vorzugsweise von kleiner als 3°C und besonders vorteilhaft von ungefähr 0°C gekühlt.

Durch eine Kühlung des Elektrolyten können höhere Stromstärken während der elektrolytischen Oxidation erzielt werden, wodurch eine vorteilhaft dicke und mechanisch sowie chemisch besonders beständige Aluminiumoxidschicht geschaffen werden kann. Ferner kann hierdurch eine unvorteilhafte Verfärbung des Gargutträgers bei einem Verbleib in der Garmuffel während eines pyrolytischen Selbstreinigungsbetriebs des Gargeräts wirkungsvoll vermieden werden. Des Weiteren kann eine lebensmittelhygienische Schutzschicht bereitgestellt werden. Durch eine Verwendung von Aluminium kann eine vorteilhafte Reduzierung eines Energieverbrauchs des Gargeräts ermöglicht werden. Insbesondere kann aufgrund einer geringen Masse des Gargutträgers eine Aufheizzeit des Gargeräts auf eine von einem Bediener gewählte Temperatur verkürzt werden.

In einer bevorzugten Ausgestaltung wird vorgeschlagen, dass eine Dicke der Schutzschicht zumindest 5 µm beträgt. Insbesondere beträgt die Dicke wenigstens 10 µm, vorzugsweise mindestens 20 µm und besonders vorteilhaft zumindest 30 µm. Insbesondere ist die Dicke der Schutzschicht größer als eine Dicke einer natürlichen Aluminiumoxidschicht, die sich insbesondere auf jedem einer Umgebungsluft ausgesetzten Aluminiumbauteil bildet. Unter einer "Dicke" der Schutzschicht soll insbesondere eine kürzeste Distanz zwischen einer Oberfläche des Aluminiumgrundkörpers und einer vom Aluminiumgrundkörper abgewandten Oberfläche der Schutzschicht verstanden werden. Hierdurch kann ein Gargutträger mit besonders vorteilhaften mechanischen, chemischen und thermischen Eigenschaften bereitgestellt werden.

In einer besonders bevorzugten Ausgestaltung wird vorgeschlagen, dass die Schutzschicht eine Mikrohärte nach Vickers von zumindest 350 mHV 0,025 aufweist. Insbesondere beträgt die Mikrohärte nach Vickers mindestens 400 mHV 0,025, vorzugsweise wenigstens 450 mHV 0,025 und besonders vorteilhaft zumindest 500 mHV 0,025. Hierdurch kann ein Gargutträger mit einer besonders hohen mechanischen Beständigkeit bereitgestellt werden.

Ferner wird vorgeschlagen, dass die Schutzschicht zumindest kurzzeitig einer Temperatur von wenigstens 1800 K widersteht. Insbesondere widersteht die Schutzschicht zumindest kurzzeitig einer Temperatur von wenigstens 1900 K, vorzugsweise von mindestens 2000 K und besonders vorteilhaft von zumindest 2100 K. Darunter, dass "die Schutzschicht zumindest kurzzeitig einer Temperatur von wenigstens x widersteht", soll insbesondere verstanden werden, dass die Schutzschicht bei einer hinreichend langsamen Erwärmung auf die Temperatur x der Temperatur x zumindest für eine Zeitspanne von 5 s, vorzugsweise von 15 s und besonders vorteilhaft von 30 s schadensfrei widerstehen kann. Unter einer "hinreichend langsamen Erwärmung" soll insbesondere eine zeitliche Temperaturzunahme verstanden werden, welche langsam genug ist, um thermische Spannungen zu vermeiden. Hierdurch kann eine hohe thermische Beständigkeit der Schutzschicht erreicht werden.

Vorteilhaft weist die Schutzschicht eine Wärmeleitfähigkeit von höchstens 50 W m⁻¹K⁻¹ auf. Vorzugsweise weist die Schutzschicht eine Wärmeleitfähigkeit von höchstens 40 W m⁻¹K⁻¹, insbesondere von maximal 30 W m⁻¹K⁻¹ und besonders vorteilhaft von höchstens 25 W m⁻¹K⁻¹ auf. Hierdurch kann eine vorteilhafte thermische Abschirmung des Aluminiumgrundkörpers erzielt werden, so dass eine thermische Ausdehnung des Aluminiumgrundkörpers gegenüber einer von einer Schutzschicht freien Ausführung eines Gargutträgers reduziert werden kann.

In einer weiteren Ausgestaltung der Erfindung wird vorgeschlagen, dass der Gargutträger eine Anti-Haftschicht aufweist, die zumindest teilweise über der Schutzschicht angeordnet ist. Unter einer "Anti-Haftschicht" soll insbesondere eine Schicht verstanden werden, deren Benetzbarkeit kleiner ist als eine Benetzbarkeit der Schutzschicht und deren Haftreibungskoeffizient bei Kontaktierung mit einer beliebigen Materialprobe vorzugsweise geringer ist als ein Haftreibungskoeffizient der Schutzschicht bei Kontaktierung mit der gleichen Materialprobe. Vorzugsweise ist der Haftreibungskoeffizient der Anti-Haftschicht bei Kontaktierung mit der Materialprobe identisch mit einem Gleitreibungskoeffizienten der Anti-Haftschicht bei einem Gleiten der Materialprobe über die Anti-Haftschicht. Vorzugsweise ist die Anti-Haftschicht hydrophob. Darunter, dass die Anti-Haftschicht "zumindest teilweise über der Schutzschicht angeordnet ist", soll insbesondere verstanden werden, dass Teile der Anti-Haftschicht auf einer dem Aluminiumgrundkörper abgewandten Seite der Schutzschicht angeordnet sind. Hierdurch kann ein Reinigungsaufwand vorteilhaft reduziert werden. Des Weiteren kann ein Bedienkomfort durch eine geringe Reibung zwischen dem Gargutträger und einer Gargutträgerführungsvorrichtung gesteigert werden.

Vorteilhaft weist die Anti-Haftschicht PTFE auf. Vorzugsweise ist die Anti-Haftschicht vollständig aus PTFE gebildet. Unter "PTFE" soll insbesondere ein unverzweigtes, linear aufgebautes, teilkristallines Polymer aus Fluor und Kohlenstoff verstanden werden. Hierdurch kann eine Anti-Haftschicht mit einer vorteilhaften chemischen und thermischen Beständigkeit bereitgestellt werden, welche vorteilhaft besonders schlecht benetzbar ist.

Ferner wird vorgeschlagen, dass die Anti-Haftschicht eine Dicke von 5 µm oder weniger aufweist. Vorzugsweise beträgt eine Dicke der Anti-Haftschicht 1 µm bis 5 µm, insbesondere 2 µm bis 4 µm und besonders vorteilhaft ungefähr 3 µm. Unter einer "Dicke der Anti-Haftschicht" soll insbesondere eine kürzeste Distanz zwischen einer Oberfläche der Schutzschicht und einer von der Schutzschicht abgewandten Oberfläche der Anti-Haftschicht verstanden werden. Hierdurch kann eine vorteilhaft dünne Anti-Haftschicht bereitgestellt werden.

Ferner wird ein Verfahren mit einem einen Aluminiumgrundkörper aufweisenden Gargutträger, insbesondere einem erfindungsgemäßen Gargutträger, vorgeschlagen, bei dem eine Schutzschicht aus Aluminiumoxid durch Hartanodisieren des Aluminiumgrundkörpers hergestellt wird. Hierdurch kann ein Gargutträger geschaffen werden, der während des pyrolytischen Selbstreinigungsbetriebs des Gargeräts in der Garmuffel verbleiben kann, wobei eine Farbgebung des Gargutträgers unverändert bleibt. Insbesondere kann die Schutzschicht nach dem Hartanodisieren verdichtet werden. Vorzugsweise wird die Schutzschicht in heißem, vorzugsweise demineralisiertem, Wasser verdichtet. Unter "heißem Wasser" soll insbesondere Wasser unterhalb eines Siedepunkts und mit einer Temperatur von zumindest 90°C, vorzugsweise von zumindest 95°C und besonders vorteilhaft von ungefähr 96°C verstanden werden. Darunter, dass die Schutzschicht "verdichtet" wird, soll insbesondere verstanden werden, dass Poren in der hartanodisierten Aluminiumoxidschicht verkleinert und vorzugsweise verschlossen werden. Hierdurch kann eine Korrosionsbeständigkeit des Gargutträgers weiter erhöht werden.

Ferner wird ein System bestehend aus einem Gargerät und zumindest einem erfindungsgemäßen Gargutträger vorgeschlagen. Insbesondere ist der Gargutträger dazu vorgesehen, innerhalb einer Garmuffel des Gargeräts angeordnet zu werden. Vorzugsweise umfasst das Gargerät eine Pyrolysefunktion zu einer pyrolytischen Selbstreinigung der Garmuffel und des Gargutträgers. Hierdurch kann ein Reinigungsaufwand vorteilhaft reduziert werden. Insbesondere weist das Gargerät eine Gargutträgerführungsvorrichtung auf, die zu einer Lagerung und/oder Führung des Gargutträgers vorgesehen ist. Vorzugsweise weist die Gargutträgerführungsvorrichtung Aluminium als Hauptbestandteil auf. Besonders vorteilhaft weist die Gargutträgerführungsvorrichtung eine Aluminiumoxidoberfläche auf, auf die der Gargutträger in einem betriebsbereiten Zustand auflegbar ist. Hierdurch kann eine vorteilhaft geringe Reibung zwischen dem Gargutträger und der Gargutträgerführungsvorrichtung erzielt werden. Ferner können mechanische Beschädigungen, insbesondere Schleifspuren, vermieden werden.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Gargutträger mit einem Aluminiumgrundkörper und einer hartanodisierten Schutzschicht in einer perspektivischen Darstellung,
- Fig. 2: einen Teilbereich des Gargutträgers in einer nicht maßstabsgetreuen Schnittdarstellung entlang einer Linie II-II in Fig. 1 und
- Fig. 3: ein Schaubild zum Verfahren des Hartanodisierens.

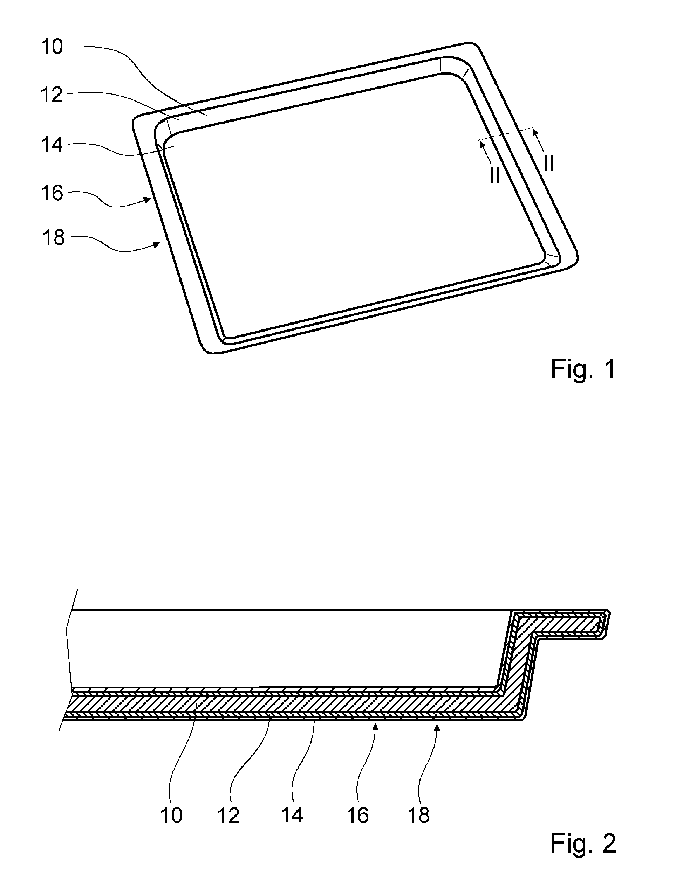

Fig. 1 zeigt einen als Garblech 16 ausgebildeten Gargutträger 18. Alternativ kann der Gargutträger 18 auch als Garrost oder als Fettfangwanne ausgebildet sein. Der Gargutträger 18 weist einen Aluminiumgrundkörper 10 und eine Aluminiumoxid umfassende hartanodisierte Schutzschicht 12 auf. Die Schutzschicht 12 umgibt den Aluminiumgrundkörper 10 allseitig vollständig. Fig. 2 zeigt eine nicht maßstabsgetreue Schnittdarstellung durch einen Teilbereich des Gargutträgers 18 entlang einer Linie II-II in Fig. 1. Die Schutzschicht 12 weist eine Dicke von etwa 30 µm und eine Mikrohärte nach Vickers von ungefähr 500 mHV 0,025 auf. Die Schutzschicht 12 ist imstande, kurzzeitig einer Temperatur von 2100 K zu widerstehen. Die Schutzschicht 12 weist eine Wärmeleitfähigkeit von ungefähr 20 W m⁻¹K⁻¹ auf. Der Gargutträger 18 ist dazu vorgesehen, in einer Backmuffel eines Backofens verwendet zu werden (nicht dargestellt). Durch die hartanodisierte Schutzschicht 12 ist es möglich, den Gargutträger 18 während eines pyrolytischen Selbstreinigungsbetriebs des Backofens in der Backmuffel zu belassen, wobei der Gargutträger 18 während der Selbstreinigung seine Farbgebung beibehält. Durch die geringe Dichte des Aluminiums ist eine Gesamtmasse des Gargutträgers 18 relativ klein, verglichen mit Gargutträgern aus Stahl, wodurch ein geringerer Energieverbrauch erreicht werden kann. Der Gargutträger 18 umfasst ferner eine aus PTFE gebildete Anti-Haftschicht 14, welche über der Schutzschicht 12 angeordnet ist. Die Anti-Haftschicht 14 weist eine Dicke von ungefähr 3 µm auf. Durch die Anti-Haftschicht 14 kann ein geringer Reinigungsaufwand des Gargutträgers 18 erzielt werden. Während des pyrolytischen Selbstreinigungsbetriebs des Backofens muss eine Temperatur von höchstens 360°C eingehalten werden, um eine Bildung von giftigen PTFE-Dämpfen zu vermeiden. In einer alternativen Ausführung ist denkbar, dass auf eine Anti-Haftschicht verzichtet wird. In diesem Fall kann ein pyrolytischer Selbstreinigungsbetrieb auch bei Temperaturen oberhalb von 360°C durchgeführt werden.

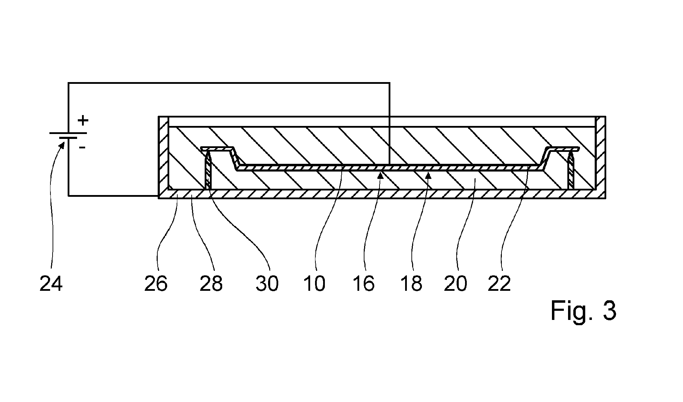

Die Schutzschicht 12 wird durch ein Hartanodisieren des Aluminiumgrundkörpers 10 hergestellt. Fig. 3 zeigt ein Schaubild dieses Verfahrens. Hierbei wird der Aluminiumgrundkörper 10 in eine 15-prozentige Schwefelsäure 20 eingetaucht, welche sich in einem Behälter 26 befindet. Die Schwefelsäure 20 ist auf eine Temperatur von 0°C gekühlt. Der Aluminiumgrundkörper 10 wird als Anode 22 an eine Gleichspannungsquelle 24 angeschlossen. Der elektrisch leitfähige Behälter 26 wird als Kathode 28 an die Gleichspannungsquelle 24 angeschlossen. Der Aluminiumgrundkörper 10 und der Behälter 26 sind durch elektrisch isolierende Abstandshalter 30 beabstandet. Der Behälter 26 und die Abstandshalter 30 sind jeweils aus einem Material gefertigt, welches der Schwefelsäure 20 widerstehen kann. Die von der Gleichspannungsquelle 24 gelieferte Gleichspannung wird zwischen 10 V und 100 V schrittweise erhöht, bis die gewünschte Dicke der Schutzschicht 12 erreicht ist. Nach Abschluss des Hartanodisierens wird der Aluminiumgrundkörper 10 mit der Schutzschicht 12 auf 400°C erhitzt, wodurch eine Verfärbung der Schutzschicht 12 auftritt. Nach einem Abkühlen behält die Schutzschicht 12 ihre Farbgebung bei allen folgenden Erhitzungen bei. Die Anti-Haftschicht 14 wird anschließend durch Imprägnierung der Schutzschicht 12 aufgebracht.

### Bezugszeichen

- 10: Aluminiumgrundkörper
- 12: Schutzschicht
- 14: Anti-Haftschicht
- 16: Garblech
- 18: Gargutträger
- 20: Schwefelsäure
- 22: Anode
- 24: Gleichspannungsquelle
- 26: Behälter
- 28: Kathode
- 30: Abstandshalter

## Patentansprüche

1. Gargutträger mit einem Aluminiumgrundkörper (10) und einer Aluminiumoxid umfassenden Schutzschicht (12), die auf dem Aluminiumgrundkörper (10) angeordnet ist, **dadurch gekennzeichnet, dass** die Schutzschicht (12) hartanodisiert ist.

2. Gargutträger nach Anspruch 1, **dadurch gekennzeichnet, dass** eine Dicke der Schutzschicht (12) zumindest 5 µm beträgt.

3. Gargutträger nach Anspruch 1 oder 2, **dadurch gekennzeichnet, dass** die Schutzschicht (12) eine Mikrohärte nach Vickers von zumindest 350 mHV 0,025 aufweist.

4. Gargutträger nach einem der vorhergehenden Ansprüche, **dadurch gekennzeichnet, dass** die Schutzschicht (12) zumindest kurzzeitig einer Temperatur von wenigstens 1800 K widersteht.

5. Gargutträger nach einem der vorhergehenden Ansprüche, **dadurch gekennzeichnet, dass** die Schutzschicht (12) eine Wärmeleitfähigkeit von höchstens 50 W m⁻¹K⁻¹ aufweist.

6. Gargutträger nach einem der vorhergehenden Ansprüche, **gekennzeichnet durch** eine Anti-Haftschicht (14), die zumindest teilweise über der Schutzschicht (12) angeordnet ist.

7. Gargutträger nach Anspruch 6, **dadurch gekennzeichnet, dass** die Anti-Haftschicht (14) PTFE aufweist.

8. Gargutträger nach Anspruch 6 oder 7, **dadurch gekennzeichnet, dass** die Anti-Haftschicht (14) eine Dicke von 5 µm oder weniger aufweist.

9. Verfahren mit einem einen Aluminiumgrundkörper (10) aufweisenden Gargutträger, insbesondere nach einem der vorherigen Ansprüche, **dadurch gekennzeichnet, dass** eine Schutzschicht (12) aus Aluminiumoxid durch Hartanodisieren des Aluminiumgrundkörpers (10) hergestellt wird.

10. System bestehend aus einem Gargerät und zumindest einem Gargutträger nach einem der Ansprüche 1 bis 8.
